# EUROPÄISCHE PATENTANMELDUNG

(11) **EP 1 330 949 A1**
(43) Veröffentlichungstag der Anmeldung: **30.07.2003**
(21) Anmeldenummer: 03001170.4
(22) Anmeldetag: 21.01.2003
(51) Int. Cl.: A01G 9/10

(54) **Verfahren und Vorrichtung zum Herstellen von aus Pflanzsubstrat und diesem zugemengten Verfestigungsmittel bestehenden Formkörpern**

(30) Priorität: 23.01.2002 DE 10202678
(71) Anmelder: Sonderhoff GmbH, 50829 Köln (DE); Leidolt, Harald, 78224-Singen-Friedingen (DE)
(72) Erfinder: Langerbeins, Klaus, D-50737 Köln (DE); Leidolt, Harald, D-78224 Singen-Friedingen (DE); Weise, Karl-Heinz, D-56204 Hillscheid (DE)
(74) Vertreter: Hennicke, Ernst Rüdiger

(57) **Zusammenfassung**

Das erfindungsgemäße Verfahren und die erfindungsgemäße Vorrichtung (10) dienen zum Herstellen von aus Pflanzsubstrat (33) und diesem zugemengten Verfestigungsmittel (34) bestehenden Formkörpern für die Anzucht von Pflanzen. Hierbei wird aus Substrat und Verfestigungsmittel zunächst ein Formkörperrohstoff (35) mit vergleichsweise geringem Flüssigkeitsanteil hergestellt, der gut schütt- bzw. rieselfähig ist und der in Formöffnungen (22) einer Matrizenform (12) eingebracht und in diesen verdichtet wird, woraufhin die fertigen Formkörper aus den Formöffnungen der Matrizenform nach zumindest teilweisem Aushärten bzw. Abbinden des Verfestigungsmittels ausgeformt werden.

## Beschreibung

Die Erfindung betrifft ein Verfahren zum Herstellen von aus Pflanzsubstrat und diesem zugemengten Verfestigungsmittel bestehenden Formkörpern, insbesondere für die Pflanzenanzucht. Die Erfindung ist außerdem auf eine Vorrichtung zum Herstellen von aus Pflanzsubstrat und diesem zugemengten Verfestigungsmittel bestehenden Formkörpern gerichtet, die insbesondere zur Durchführung des erfindungsgemäßen Verfahrens geeignet und bestimmt ist.

Bei der "klassischen" Anzucht von Pflanzen wird ein Sämling oder Steckling in einem Blumentopf od.dgl. befindlicher Anzuchterde herangezogen, bis er so groß gewachsen ist, daß er zum Weiterwachsen umgetopft bzw. in ein Beet ausgepflanzt werden kann. Die Anzucht von Pflanzen auf diese Weise ist arbeits- und kostenintensiv und eignet sich auch nicht für eine voll mechanisierte Handhabung der Pflanzen.

Um die Anzucht zu erleichtern und eine maschinelle Handhabung der Jungpflanzen zu ermöglichen, hat man Formkörper entwikkelt, die im wesentlichen aus einem Pflanzsubstrat, beispielsweise aus Anzuchterde, Torf, Sand, Gartenerde, Komposten od.dgl. oder Mischungen hieraus bestehen, dem ein Verfestigungsmittel zugefügt ist, dessen Aufgabe darin besteht, den Formkörper zumindest während der Anzuchtphase der Pflanzen in Form zu halten, auch wenn dieser regelmäßig mit Wasser gegossen wird. Diese im wesentlichen aus organischem Material bestehenden Formkörper können zusammen mit der darin herangezogenen Jungpflanze umgepflanzt werden, wobei sie problemlos von der Pflanze durchwurzelt werden können und mit der Zeit im Erdreich verrotten.

Derartige Formkörper sowie ein Verfahren und eine Vorrichtung zu ihrer Herstellung sind beispielsweise aus der DE 38 29 256 C2 bekannt. Bei dem bekannten Verfahren und der Vorrichtung wird das Pflanzsubstrat zunächst mit Wasser zu einer pastösen Masse vermischt, bevor dieser Mischung ein hydrophiles Polyurethan-Prepolymer zugegeben und der so erzeugte Formkörperrohstoff in eine Form zum Aushärten bzw. Abbinden des Verfestigungsmittels gegeben wird. Das bekannte Verfahren und die hierfür vorgeschlagene Vorrichtung haben sich in der Praxis nicht durchsetzen können, da das Pflanzsubstrat hierzu mit einer sehr großen Wassermenge vermischt werden mußte, was zum einen zur Folge hatte, daß das Verfestigungsmittel wegen des für seine Reaktion im Überschuß vorhandenen Wassers binnen kürzester Zeit ausreagierte noch bevor es vollständig in die Substratpaste eingemischt war. Die Trocknungszeit für die fertigen Formkörper war wegen der hohen Wassermenge unverhältnismäßig hoch bzw. es mußte für die Trocknung ein großer maschineller und energetischer Aufwand betrieben werden, beispielsweise in Form von Trocknungsaggregaten, in denen den Formkörpern das Wasser nach dem Aushärten des Verfestigungsmittels wieder entzogen wurde. Darüber hinaus hat sich auch gezeigt, daß das in der vorgenannten, älteren Patentschrift als Verfestigungsmittel vorgeschlagene Polyurethan-Prepolymer hinsichtlich seiner Toxizität bei der Verarbeitung nicht unbedenklich ist, so daß für die Absaugung von während des Aushärt- und Trocknungsvorgangs austretenden Gasen mit großem Aufwand Sorge getragen werden mußte.

Mit der DE 198 30 955 A1 ist vorgeschlagen worden, als Verfestigungsmittel für ein Pflanzsubstrat zur Herstellung von Formkörpern für die Pflanzenanzucht eine Wasser-NCO-Prepolymer-Emulsion zu verwenden, die nicht nur die vorerwähnten toxikologischen Probleme nicht aufwirft, sondern die auch mit wesentlich geringerer Wassermenge eine zuverlässige Bindung des Pflanzsubstrats erlaubt. Diese Druckschrift, auf die hiermit ausdrücklich Bezug genommen wird und deren Offenbarungsinhalt zum Gegenstand der vorliegenden Anmeldung gemacht wird, läßt offen, wie ein maschinelles Verfahren und eine Vorrichtung beschaffen sein kann, um Formkörper der in Frage stehenden Art aus Pflanzsubstrat und einem Verfestigungsmittel wirtschaftlich mit nur geringem Ausschuß hergestellt werden können. Dies ist Aufgabe der vorliegenden Erfindung.

Die erfindungsgemäße Aufgabe wird mit dem Verfahren durch Einhaltung folgender Verfahrensschritte gelöst:
- Zuführen einer vorbestimmten Menge im wesentlichen trockenen Substrats in einen Mischbehälter und gleichzeitiges Einsprühen des Verfestigungsmittels in das Substrat und Vermischung von Substrat und Verfestigungsmittel mittels eines Mischorgans zu einem Formkörperrohstoff;
- Abzug des Formkörperrohstoffs aus dem Mischbehälter und Einbringen in Formöffnungen einer Matrizenform;
- Verdichten des in den Formöffnungen befindlichen Formkörperrohstoffs; und
- Ausformen der Formkörper aus den Formöffnungen der Matrizenform nach zumindest teilweisem Aushärten bzw. Abbinden des Verfestigungsmittels.

Besonders vorteilhaft ist hierbei das Verfestigungsmittel eine Wasser-NCO-Prepolymer-Emulsion, wie sie in der vorerwähnten Deutschen Offenlegungsschrift beschrieben ist. Insbesondere kann also als Verfestigungsmittel eine Emulsion aus Wasser und einem Prepolymer auf Basis organischer Di- und/oder Polyisocyanate, insbesondere einem Toluylendiisocyanat-Prepolymer, verwendet werden.

Durch die besonders vorteilhafte Ausgestaltung des Mischvorgangs von Pflanzsubstrat und Verfestigungsmittel, bei dem das Verfestigungsmittel direkt in das trockene Substrat eingesprüht wird, erreicht man auch bei nur geringem Flüssigkeitsanteil einen sehr hohen Durchmischungsgrad binnen sehr kurzer Zeit, die in der Praxis nur 6 bis 10 Sekunden dauert. Der so erzeugte Formkörperrohstoff ist bei seinem Abzug aus dem Mischbehälter somit nicht naß, sondern noch vergleichsweise trocken und damit ein rieselfähiges Schüttgut, wobei die Abbindung bzw. Reaktion des Verfestigungsmittels beim Abzug des Rohstoffs aus dem Mischbehälter noch nicht oder jedenfalls nicht in nennenswertem Maße eingesetzt hat und eine ausreichend lange, offene Zeit verbleibt, um den Formkörperrohstoff in die Öffnungen in der Matrizenform einzufüllen und darin zu verdichten, bevor das Verfestigungsmittel das Pflanzsubstrat endgültig bindet und so zu den tablettenartigen Formkörpern werden läßt. Wegen der geringen Wassermenge im Formkörperrohstoff ist die Trocknungszeit der Formkörper gering und es kann auf aufwendige Trockungsaggregate verzichtet werden.

Besonders vorteilhaft ist es, wenn das Substrat mittels einer Zufuhreinrichtung von oben in den Mischbehälter zugeführt und das Verfestigungsmittel in das fallende Substrat eingesprüht wird. Durch das Einsprühen in das fallende Substrat erreicht man eine Vorvermischung von Verfestigungsmittel und Pflanzsubstrat, was eine weitere Verringerung der Mischzeit im Mischbehälter ermöglicht. Während des Mischvorgangs wird das Mischorgan vorzugsweise an der Innenwandung des Mischbehälters zu deren Abreinigung entlang bewegt, so daß das vergleichsweise klebrige Verfestigungsmittel keine Chance hat, den Mischbehälter bei längerem Betrieb zuzusetzen.

Der Formkörperrohstoff wird zweckmäßig aus dem Mischbehälter chargenweise durch eine in dessen Boden angeordnete Abzugsöffnung abgezogen und fällt von dort direkt auf die Oberseite der Matrizenform zur anschließenden Verteilung in die Formöffnungen. Die Verteilung des Formkörperrohstoffs erfolgt vorzugsweise mittels mindestens einer Verteilerschnecke, mit der das Material seitlich über die Matrizenform transportiert wird, während sich diese etwa quer zur Förderrichtung der Verteilerschnecke bewegt. Bei der Materialverteilung in die Formöffnungen der Matrizenform ist es weiter von Vorteil, wenn die Matrizenform während des Einbringens des Formkörperrohstoffs in die Formöffnungen einer Rüttelbewegung unterworfen wird, wodurch ein schnelleres Einfüllen und ein besserer Füllgrad erreicht wird.

Um zu gewährleisten, daß nur die Menge an Formkörperrohstoff eingesetzt wird, die auch tatsächlich verarbeitet, also in die Formöffnungen eingefüllt werden kann, wird in vorteilhafter Ausgestaltung der Erfindung die Menge des zur Verfüllung in die Formöffnungen auf der Matrizenform befindlichen Formkörperrohstoffs mittels einer Sensoreinrichtung ermittelt und werden in Abhängigkeit von dem ermittelten Wert die Verfahrensschritte zum Anmischen einer weiteren Charge Formkörperrohstoffs im Mischbehälter ausgelöst. Es wird also erst dann neuer Formkörperrohstoff hergestellt, wenn dieser zur Weiterverarbeitung tatsächlich benötigt wird.

Besonders vorteilhaft ist es in diesem Zusammenhang auch, wenn der Überschuß des zur Einfüllung in die Formöffnungen seitlich über die Matrizenform transportierten Formkörperrohstoffs zurück zur etwa unterhalb der Abzugsöffnung gelegenen Aufgabestelle transportiert und von dort erneut seitlich über dieselbe oder eine nachfolgende Matrizenform transportiert und dabei in die darin enthaltenen Formöffnungen eingefüllt wird. Bei dieser Weiterbildung des Verfahrens wird also Formkörperrohstoff, der bei seiner Verteilung auf der Oberseite der Matrizenform nicht in die darin angeordneten Formkörperöffnungen gefallen ist, zurück zur Aufgabestelle, also etwa vor die Verteilerschnecke transportiert und erneut quer über die Matrizenform verteilt, um so bei einem zweiten Durchgang in die Formöffnungen fallen zu können. Hierdurch wird sichergestellt, daß das eingesetzte Material tatsächlich weitestgehend vollständig zu Formkörpern verarbeitet wird.

Der in den Formöffnungen befindliche Formkörperrohstoff wird zweckmäßig mittels Stempelelementen verdichtet, die in die Formöffnungen eingeführt und gleichzeitig rotierend oder oszillierend angetrieben werden. Durch die Bewegung der Stempelelemente wird dabei wirksam verhindert, daß der noch nicht ausgehärtete Formkörperrohstoff an den Stirnseiten der Stempelelemente anhaftet. Nach dem Aushärten bzw. Abbinden des Verfestigungsmittels werden die Formkörper vorzugsweise mit Hilfe von Ausformstempeln aus den Formöffnungen der Matrizenform in ein darunter befindliches Aufnahmebehältnis ausgedrückt, woraufhin die dann leere Matrizenform zur Herstellung weitere Formkörper zur Verfügung steht, während das Aufnahmebehältnis mit den darin befindlichen, fertigen Formkörpern ggf. nach einer Phase der Nachtrocknung zum Versand an die Abnehmer vorbereitet werden kann.

In vorteilhafter Ausgestaltung der Erfindung wird die Matrizenform mittels eines Förderorgans auf diesem aufliegend nacheinander unter dem Mischbehälter, der Verteilerschnecke, den Verdichtungsstempelelementen und den Ausformstempeln transportiert, wobei der Transportvorgang beim Verdichten und beim Ausformen während dieser Vorgänge unterbrochen wird, was es erleichtert, die Stempelelemente beim Verdichten und Ausformen exakt in die Formöffnungen in der Matrizenform einzuführen.

Das Masseverhältnis von dem flüssigen, in bevorzugter Ausgestaltung wässrigen Verfestigungsmittel zu Pflanzsubstrat beträgt vorzugsweise 1:1 bis 5:1, bezogen auf die Masse des Pflanzsubstrats. Bei Verwendung der besonders bevorzugten, aus der DE 198 30 955 A1 bekannten Wasser-NCO-Prepolymer-Emulsion ergibt sich im Formkörperrohstoff ein Prepolymergehalt in der Größenordnung von 1 bis 20 Gew%, bezogen auf die trockene Gesamtmasse der Mischung (also ohne Wasser), das Verhältnis liegt hier vorzugsweise zwischen 2 bis 10 %. Besonders vorteilhaft ist es, wenn das Verfestigungsmittel mittels eines Mischaggregats durch Vermischen eines wasseraushärtenden Prepolymers mit Wasser erzeugt und unmittelbar anschließend in das Pflanzsubstrat im Mischbehälter eingesprüht wird. Hierbei wird also das Verfestigungsmittel erst unmittelbar vor dem Einsprühen in das Substrat aktiviert, was eine vergleichsweise lange Verarbeitungszeit ermöglicht. Zur Reinigung des Mischaggregats ist es dabei zweckmäßig, dieses nach Erzeugung des Verfestigungsmittels mit Wasser nachzuspülen wird, das zusätzlich zu dem Verfestigungsmittel in das Pflanzsubstrat eingesprüht werden kann. Hierbei wird also der erwünschte Feuchtegrad im Formkörperrohstoff erst durch das nachgesprühte Reinigungswasser aus dem Mischaggregat eingestellt.

Mit der Erfindung wird eine Vorrichtung zum Herstellen von Formkörpern für die Anzucht von Pflanzen geschaffen, die eine Fördereinrichtung für mindestens eine Matrizenform sowie eine Substrat-Aufbereitungs- und Aufgabeeinrichtung, eine Verdichtungseinrichtung und eine Ausformeinrichtung aufweist, die in Transportrichtung der Fördereinrichtung entlang dieser hintereinander angeordnet sind.

Die Substrat-Aufbereitungs- und Aufgabeeinrichtung weist zweckmäßig einen Mischbehälter sowie ein diesem zugeordnetes Substrat-Förderorgan und eine in den Mischbehälter mündende Sprüheinrichtung für das Verfestigungsmittel auf, die vorzugsweise im wesentlichen aus einem Mischaggregat zum Vermischen eines Verfestigungsmittelrohstoffs mit Wasser und einer Einspritzdüse besteht, mit dem das Verfestigungsmittel erst unmittelbar vor dessen Einsprühen in das Substrat hergestellt wird.

Der Mischbehälter ist vorzugsweise mit einem Mischerrührwerk versehen, das für eine schnelle, vollständige Durchmischung von Substrat und Verfestigungsmittel sorgt und auch der Abreinigung der Innenwandung des Mischbehälters dienen kann. Zweckmäßig ist der Mischbehälter oberhalb der auf der Fördereinrichtung aufliegend transportierten Matrizenform(en) an einer Aufgabestelle angeordnet ist und weist eine an seinem Boden angeordnete, verschließbare Abzugsöffnung auf, durch die der fertig durchmischte Formkörperrohstoff dann direkt auf die Matrizenform(en) fällt, sobald die Abzugsöffnung geöffnet wird.

Die Aufgabeeinrichtung weist in besonders vorteilhafter Weiterbildung der Erfindung mindestens eine oberhalb der Matrizenform(en) angeordnete, im wesentlichen quer zur Transportrichtung der Fördereinrichtung fördernde Verteilerschnecke für den Formkörperrohstoff auf, die den Formkörperrohstoff problemlos und zügig quer über die Matrizenform bewegt und so in die Formöffnungen einfüllt.

Als besonders zweckmäßig hat sich eine Ausgestaltung erwiesen, bei der die Aufgabeeinrichtung zwei hintereinander und oberhalb der Matrizenform(en) angeordnete, gegenläufig fördernde Verteilerschnecken für den Formkörperrohstoff aufweist, so daß Formkörperrohstoff, der von der ersten Verteilerschnecke über die gesamte Breite der Matrizenform transportiert wurde, ohne in eine Formöffnung zu fallen, von der zweiten Verteilerschnecke in entgegengesetzter Richtung nochmals über die Form transportiert wird und hierbei dann in eine der Formöffnungen gelangen kann. Als weiter vorteilhaft hat sich dabei eine seitlich an bzw. neben der Matrizenform sich bis in den Förderweg der Verteilerschnecke(n) erstreckende Rückführeinheit für überschüssigen Formkörperrohstoff erwiesen, die dafür sorgt, daß nicht eingefüllter Rohstoff wieder vor die (erste) Verteilerschnecke gebracht wird, um nochmals quer über die Matrizenform zum Einfüllen in die Formöffnungen geschoben zu werden.

Die Rückführeinheit besteht vorzugsweise im wesentlichen aus einem seitlich neben der Fördereinrichtung auf Höhe des mit dieser transportierten Matrizenform angeordneten Förderband, das sich von einer Übernahmestelle an der in Transportrichtung der Fördereinrichtung hinteren Verteilerschnecke bis zu einer Übergabestelle vor der vorderen Verteilerschnecke erstreckt. Im Bereich der Übergabestelle ist der Rückführeinheit zweckmäßig eine rotierend antreibbare Bürsteneinheit zugeordnet, die die Übergabe des klebrigen Formkörperrohstoffs auf die Matrizenform sicher gewährleistet.

Im Bereich der Aufgabeeinrichtung ist vorzugsweise eine Rütteleinrichtung angeordnet, die den Eintritt von Formkörperrohstoff in die Formöffnungen unterstützt. Die Rütteleinrichtung kann im wesentlichen aus einer unterhalb der Matrizenform angeordneten, rotierend antreibbaren Rüttelwelle bestehen.

Die in Transportrichtung der Fördereinrichtung hinter der Aufgabeeinrichtung angeordnete Verdichtungseinrichtung besteht vorzugsweise im wesentlichen aus einer oberhalb der Fördereinrichtung bzw. der mit dieser aufliegend transportierten Matrizenform(en) angeordneten, höhenverstellbaren Stempeleinheit mit mehreren Einzelstempeln, deren Anzahl und Lage an die Formöffnungen in der Matrizenform angepaßt sind. Dabei sind die Einzelstempel zweckmäßig um eine lotrecht zur Oberseite der Matrizenform verlaufende Drehachse rotierend oder oszillierend antreibbar. Wenn die Einzelstempel an ihrer Stirnseite mit zentralen Bohrzapfen versehen sind, ergibt sich der besondere Vorteil, daß beim Verdichtungsvorgang zugleich ein Loch in dem Formkörper hergestellt wird, in das dann später der Samen für die aufzuziehende Pflanze eingebracht wird.

Zweckmäßig weist die Verdichtungseinrichtung einen die Lage einer Matrizenform abtastenden Sensor zum Stillsetzen der Fördereinrichtung und eine Fixiereinrichtung zum Fixieren der Matrizenform auf. Indem der Verdichtungsvorgang somit nicht bei laufendem Förderband der Fördereinrichtung erfolgt, ist eine lagerechte Bewegung der Stempel relativ zu den in der Matrizenform vorhandenen Formöffnungen leicht zu erreichen. Vorteilhaft ist es auch, wenn die Einzelstempel einen gemeinsamen Antrieb haben, der in besonders vorteilhafter Ausbildung sowohl für den Drehantrieb der Stempel als auch für deren Hubbewegung sorgen kann. Der Verdichtungseinrichtung kann eine Reinigungseinheit zugeordnet sein, beispielsweise ein Hochdruckreiniger, eine Bürstenreinigungseinrichtung oder eine Kombination solcher Aggregate, die die Stempel von daran anhaftendem Formkörperrohstoff befreit, wenn die Verdichtereinrichtung gerade nicht arbeitet. Dies hat den besonderen Vorteil, daß durch eine Reinigung mit Wasser die Stempel immer feucht gehalten werden, was die Gefahr von Anbackungen gering hält. Es ist auch möglich, zwischen zwei Verdichtungsvorgängen die Stempel mit einem Trenn- oder Antihaftmittel zu besprühen, um diese Gefahr weiter zu verringern. Das für die Reinigung eingesetzte Wasser kann im Herstellungsprozeß weiter verwendet werden, beispielsweise als das Wasser, das dem Mischaggregat zur Herstellung des Verfestigungsmittels zugeführt wird.

In zweckmäßiger Weiterbildung der erfindungsgemäßen Vorrichtung ist zwischen der Verdichtungseinrichtung und der Ausformeinrichtung eine Pufferstrecke vorgesehen, die ausreichend Zeit zum Ausreagieren des Verfestigungsmittels zur Verfügung stellt, so daß die fertigen Formkörper beim Ausformvorgang sicher nicht wegen mangelhaften Abbindens des Klebstoffs beschädigt werden. Die Pufferstrecke kann im wesentlichen von einem Teil der Fördereinrichtung gebildet werden. Eine besonders kompakte Bauweise der Vorrichtung erreicht man, wenn zwischen der Verdichtungseinrichtung und der Ausformeinrichtung eine Absenkeinheit, ein Matrizenrückführband und eine Anhebeeinheit angeordnet sind, die als Teil der Fördereinrichtung gemeinsam die Pufferstrecke bilden. Die mit Formkörperrohstoff verfüllte Matrizenform wird dann nach dem Verdichten des Materials in den Formöffnungen zur Erzeugung der Formkörper in der Absenkeinheit nach unten verfahren und in der unteren Förderebene bis zur Anhebeeinheit transportiert und von dieser wieder nach oben gefahren, so daß sie sich nunmehr vor der Ausformeinrichtung befindet, die wiederum vor der Aufbereitungs- und Aufgabeeinrichtung angeordnet ist. Nach dem Ausformen der fertigen Formkörper steht die Matrizenform also unmittelbar wieder für die Produktion weiterer Formkörper zur Verfügung.

Die Ausformeinrichtung weist zweckmäßig eine die Matrizenform in einem Abstand von einem darunter anordbaren Aufnahmebehältnis haltende Halteeinrichtung sowie eine oberhalb der Matrizenform angeordnete Ausformstempeleinheit mit mehreren Ausformstempeln auf, deren Anzahl und Lage an die Formöffnungen in der darunter befindlichen Matrizenform angepaßt sind. Bei Betätigung der Ausformeinrichtung bewegen sich die Ausformstempel von oben in die Formöffnungen der Matrize und drücken dabei die fertigen Formkörper aus der Form unten heraus, von wo sie in das vorgehaltene Aufnahmebehältnis fallen.

Vorzugsweise hat die Ausformeinrichtung ein unterhalb der Ausformstempeleinheit und der Matrizenform angeordnetes Förderorgan für das Aufnahmebehältnis, mit dem dieses zur Ausformeinrichtung transportiert und nach Aufnahme der Formkörper auch wieder abtransportiert werden kann. Aus Platzgründen ist das Förderorgan vorteilhafterweise quer zur Fördereinrichtung angeordnet ist.

Es hat sich als besonders vorteilhaft erwiesen, wenn alle Maschinenteile der Vorrichtung, die in Kontakt mit dem verhältnismäßig klebrigen Formkörperrohstoff gelangen können, aus Polyethylen, Polypropylen oder Gemischen hieraus oder aus Copolymerisaten aus Ethylen und/oder Propylen bestehen. Hiervon betroffen sind im wesentlichen der Mischbehälter der Substrat-Aufbereitungseinrichtung, die Verteilerschnecke(n) der Aufgabeeinrichtung, die Druckflächen der Verdichterstempel und natürlich auch die Matrizenformen selbst. Es hat sich gezeigt, daß der Formkörperrohstoff an Polyethylen oder den anderen erwähnten Materialien kaum anhaftet und in jedem Fall mit geringem Aufwand wieder abgereinigt werden kann.

Weitere Merkmale und Vorteile der Erfindung ergeben sich aus der nachfolgenden Beschreibung und der Zeichnung, worin eine bevorzugte Ausführungsform der Erfindung anhand eines Beispiels näher erläutert ist. Es zeigt:

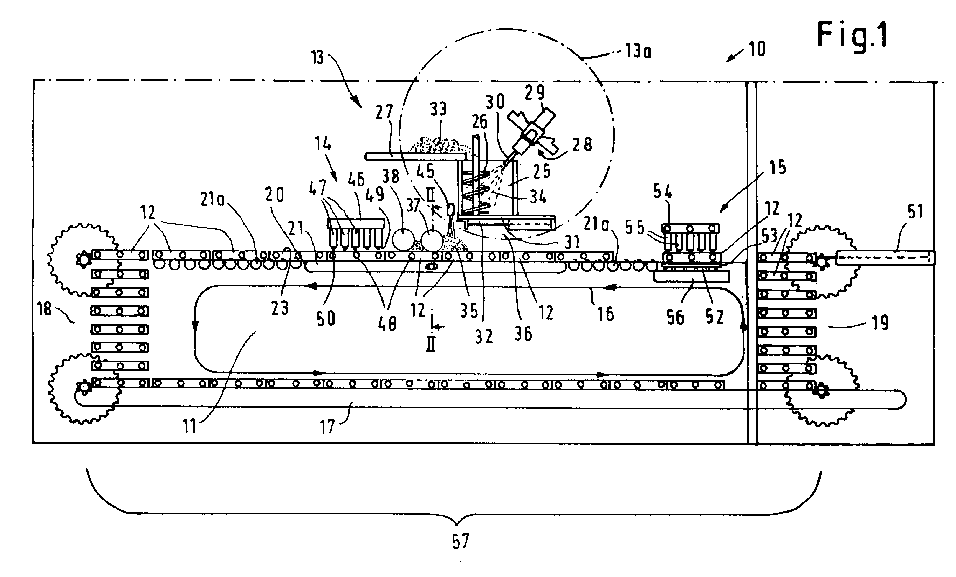

**Fig.1** eine schematische Seitenansicht der erfindungsgemäßen Vorrichtung zur Durchführung des erfindungsgemäßen Verfahrens;
**Fig. 2** einen Querschnitt längs der Linie II-II nach Fig. 1 im Bereich der Aufgabeeinrichtung der erfindungsgemäßen Vorrichtung; und
**Fig. 3** den Gegenstand der Fig. 2 in einer Draufsicht.

Die in ihrer Gesamtheit mit 10 bezeichnete, in den Zeichnungen dargestellte Vorrichtung dient zum Herstellen von aus Pflanzsubstrat und diesem zugemengten Verfestigungsmittel bestehenden Formkörpern für die Anzucht von Pflanzen. Die Vorrichtung 10 besteht im wesentlichen aus einer Fördervorrichtung 11 für eine Vielzahl von hintereinander umlaufend transportierten Matrizenformen 12, einer Substrat-Aufbereitungs- und Aufgabeeinrichtung 13, einer Verdichtungseinrichtung 14 und einer Ausformeinrichtung 15, die in Transportrichtung 16 der Fördereinrichtung 11 entlang dieser hintereinander angeordnet sind.

Die gesamte Fördereinrichtung ist in einem nicht dargestellten Maschinengestell angeordnet und besteht im wesentlichen aus einem unteren Förderband 17, einer an dessen einem Ende angeordneten Abstapeleinheit 18, einer am anderen Ende des unteren Förderbandes 17 angeordneten Aufstapeleinheit 19 sowie einem oberen Förderaggregat 20, das von einem im Bereich der Aufbereitungs- und Aufgabeeinrichtung und der Verdichtungseinrichtung angeordneten oberen Förderband 21 sowie zwischen diesem und der Abstapeleinheit bzw. der Ausformeinrichtung angeordneten Staurollen 21a besteht.

Die Formkörper, die die Form von großen runden Tabletten haben, werden mit Hilfe der Matrizenformen 12 geformt, die hierzu mit einer Vielzahl von Formöffnungen 22 versehen sind, die sowohl an der Oberseite 23 als auch an der Unterseite 24 der Matrizenformen offen sind und über die Dicke der Matrizenform einen gleichbleibenden Durchmesser haben. Die Matrizenformen bestehen aus Polyethylen, an dem der für die Herstellung der Formkörper eingesetzte, klebrige Formkörperrohstoff nur sehr schlecht haftet.

Der Formkörperrohstoff wird im Aufbereitungsteil 13a der Substrat-Aufbereitungs- und Aufgabeeinrichtung 13 hergestellt. Dieser Aufbereitungsteil besteht im wesentlichen aus einem ebenfalls aus Polyethylen hergestellten Mischbehälter 25 mit einem darin drehbar angetriebenen Mischorgan 26, einem Substratförderorgan 27 und einer Sprüheinrichtung 28, die einen Mischkopf 29 und eine Einspritzdüse 30 aufweist, die in den Mischbehälter 25 mündet. An seinem Boden 31 ist der Mischbehälter 25 mit einer verschließbaren Abzugsöffnung 32 versehen, die mit Hilfe eines nicht dargestellten Pneumatikzylinders geöffnet und wieder geschlossen werden kann.

Das trockene Pflanzsubstrat 33, das aus Torf, Sand, Anzuchterde, Rindenmulch od.dgl. oder Mischungen hieraus bestehen kann, wird mit Hilfe des Substratförderers 27 chargenweise dem Mischbehälter 25 zugeführt und fällt von oben in diesen hinein. In diesen fallenden Substratstrom wird gleichzeitig das im Mischkopf 29 aus Wasser und einem Rohstoff zusammengemischte Verfestigungsmittel 34 eingesprüht und die beiden so bereits vorgemischten Komponenten werden mit Hilfe des Mischrührwerks 26 nochmals intensiv vermischt, bevor die Abzugsöffnung 32 geöffnet wird und die Mischung als Formkörperrohstoff 35 auf die Oberseite 23 der auf dem oberen Förderband 21 aufliegend transportierten Matrizenformen 12 an einer Aufgabestelle 36 fällt.

Nach dem erfindungsgemäßen Verfahren wird nur eine vergleichsweise geringe Menge Verfestigungsmittel 34 in das trockene Substrat eingesprüht, so daß der Formkörperrohstoff 35 ebenfalls noch eine vergleichsweise trockene, schüttfähige oder rieselfähige Konsistenz hat. Bei Verwendung einer bevorzugt als Verfestigungsmittel eingesetzten Emulsion aus Wasser und einem Prepolymer auf Basis organischer Di- und/oder Polyisocyanate, insbesondere eine Toluylendiisocyanat-Prepolymer liegt das Masse-Mischungsverhältnis von Verfestigungsmittel (Emulsion) zu Pflanzsubstrat im Bereich von 1:1 bis 5:1 bezogen auf die Masse des Pflanzsubstrats. Dabei beträgt der Gewichtsanteil von Prepolymer im Substrat zwischen 1 und 20 Gew.%, bezogen auf das Gesamtgewicht der trockenen, aus Substrat und Prepolymer bestehenden Mischung. (theoretisches Masseverhältnis). Vorzugsweise liegt die eingesetzte Prepolymermenge unter 8 Gew.%. Der für die Reaktion des Prepolymers erforderliche Wasseranteil wird teils während des Mischvorgangs im Mischkopf dem Verfestigungsmittelrohstoff direkt zugegeben, teils in das Substrat in Form von Spülwasser eingesprüht, mit dem der Mischkopf zur Reinigung unmittelbar im Anschluß an die Herstellung der Emulsion und deren Einsprühen in das Substrat gespült wird. Es hat sich gezeigt, daß sich die vergleichsweise geringen Flüssigkeitsmengen von Verfestigungsmittel und Spülwasser durch das Einsprühen in das Pflanzsubstrat und Vermischen mit dem Mischrührwerk 26 in sehr kurzer Zeit mit hoher Homogenität einmischen lassen, so daß der fertige Formkörperrohstoff 35 schon nach kurzer Mischzeit im Mischbehälter 25 abgezogen werden kann. In der Praxis lassen sich Mischzeiten von weniger als zehn Sekunden realisieren, einer Zeit, die so kurz ist, daß eine Reaktion des Verfestigungsmittels im Substrat noch nicht oder jedenfalls nicht in nennenswertem Umfang eingesetzt hat.

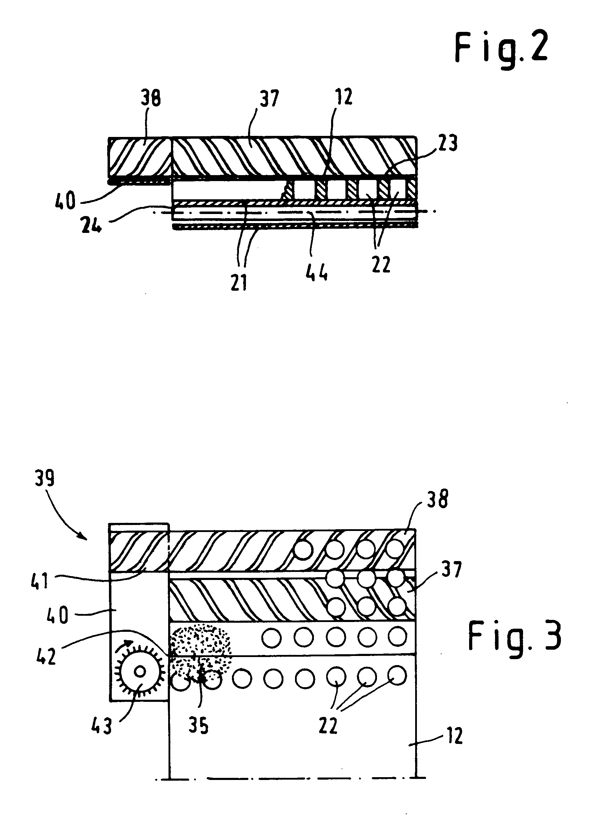

Der an der Aufgabestelle 36 nahe einer Längsseite der Matrizenformen aufgegebene Formkörperrohstoff 35 wird von den vom oberen Förderband 21 transportierten Matrizenformen mitgenommen und gelangt hierbei in den Wirkungsbereich einer ersten Verteilerschnecke 37, die den Rohstoff 35 quer zur Transportrichtung des Förderbandes über die Matrizenform fördert, wobei der Rohstoff zumindest zum größten Teil in die Formöffnungen 22 hineinfällt. Der auf diese Weise nicht in die Formöffnungen gelangende Teil des Formkörperrohstoffes gelangt unter der ersten Verteilerschnecke 37 hindurch in den Arbeitsbereich einer unmittelbar dahinter angeordneten, zweiten Verteilerschnecke 38, die entgegengesetzt zur ersten Verteilerschnecke fördert und den Rest des Formkörperrohstoffs zurück zu der Längsseite der Matrizenform fördert, an der sich auch die Aufgabestelle 36 befindet. Formkörperrohstoff, der hierbei immer noch nicht in Formöffnungen eingefüllt wird, was beispielsweise dann der Fall sein kann, wenn zuviel Rohstoff aufgegeben wurde und das Volumen der unter den Verteilerschnecken hindurchgehenden Formöffnungen beim Hin- und Hertransport des Formkörperrohstoffes nicht ausreicht, um diesen vollständig aufzunehmen, gelangt auf eine seitlich neben der Matrizenform in Höhe von deren Oberseite 23 angeordnete Rückführeinheit 39 (Fig. 2 und 3), die aus einem seitlich neben dem oberen Förderband 21 angeordneten Rücktransportband 40 besteht, das den überschüssigen Formkörperrohstoff an einer Übernahmestelle 41 von der sich seitlich über die Fördervorrichtung 11 erstrekkenden zweiten Verteilerschnecke 38 übernimmt und zurück bis zu einer Übergabestelle 42 transportiert, wo das überschüssige Material mittels einer rotierenden Bürsteneinheit 43 wieder auf die Oberseite der (nachfolgenden) Matrizenformen gebürstet wird, wenn dabei oder spätestens bei Erreichen der ersten Verteilerschnecke in die Formöffnungen 22 zu gelangen.

Die Einfüllung des Formkörperrohstoffs im Bereich der beiden Verteilerschnecken wird durch eine Rütteleinrichtung 44 in Form einer rotierenden Rüttelwelle unterstützt, die die darüber laufende Matrizenform während des Verteil- und Einfüllvorganges einer Rüttelbewegung unterwirft, infolge der der Formkörperrohstoff leichter in die Formöffnungen gelangt und in diesem bereits eine leichte Vorverdichtung erfährt.

Oberhalb der Aufgabestelle 36 ist an geeigneter Stelle ein Sensor in Form eines Lichttasters 45 angeordnet, der die Menge des vor den Verteilerschnecken 37,38 befindlichen Formkörperrohstoffs 35 feststellt und in Abhängigkeit von dessen Signal der Herstellvorgang für eine weitere Charge des Formkörperrohstoffs im Mischbehälter in Gang gesetzt wird. Hierdurch wird sichergestellt, daß nicht zuviel Formkörperrohstoff auf einmal sich an der Aufgabestelle befindet, sondern immer nur eine solche Menge, die spätestens nach zwei Umläufen durch die Verteilerschnecken in die Formöffnungen eingebracht werden kann, so daß es nicht dazu kommen kann, daß das Verfestigungsmittel in dem Formkörperrohstoff schon ausreagiert, bevor dieser in die Matrizenformen eingefüllt ist.

Die in Transportrichtung 16 hinter den beiden Verteilerschnekken 37,38 angeordnete Verdichtungseinrichtung 14 besteht im wesentlichen aus einer oberhalb der Fördereinrichtung 11 bzw. der mit dieser aufliegend transportierten Matrizenformen 12 angeordneten, höhenverstellbaren Stempeleinheit 46 mit mehreren Einzelstempeln 47, deren Anzahl und Lage an die Formöffnungen in den einzelnen Matrizenformen angepasst sind. Wenn eine mit Formkörperrohstoff gefüllte Matrizenform in den Arbeitsbereich der Stempeleinrichtung gelangt, wird das obere Förderband 21 kurzzeitig stillgesetzt und die sich unter der Stempeleinheit 46 befindliche Matrizenform mit zwei seitlich in hierfür an den Längsaußenseiten der Matrizenform vorgesehene Verriegelungsnuten 48 einfahrenden Fixierzylindern (nicht dargestellt) in einer solchen Lage arretiert, daß die Einzelstempel der Stempeleinheit genau mit den Formöffnungen der arretierten Matrizenform fluchten. Die Stempeleinheit 46 wird dann abgesenkt und gleichzeitig werden die Einzelstempel um ihre Vertikalachsen rotierend oder oszillierend angetrieben, wobei sie mit ihren unteren Stirnseiten 49 den in den Formöffnungen 22 enthaltenen Formkörperrohstoff zur Bildung der tablettenförmigen Formkörper zusammenpressen. Die rotierende bzw. oszillierende Bewegung der Einzelstempel verhindert dabei, daß klebriger Formkörperrohstoff an den Stirnseiten 49 der Einfüllstempel anhaftet und beim anschließenden Aufwärtsfahren der Stempeleinheit aus den Formöffnungen mitgenommen wird. Bei dem Verdichtungsvorgang wird in den Formkörpern auch ein Pflanzloch mit ausgebildet, wozu die Einzelstempel 47 an ihrer Stirnseite mit einem zentralen Bohrzapfen 50 versehen sind, der sich bei der Abwärtsbewegung der Stempel in den Formkörperrohstoff eindrückt.

Wenn die Stempeleinheit 46 nach dem Verdichtungsvorgang wieder soweit angehoben ist, daß die Einfüllstempel nicht mehr in die Formöffnungen 22 einfassen, können die Fixierzylinder gelöst werden und die Matrizenform mit den darin befindlichen, fertig gepressten, aber noch nicht ausgehärteten Formkörpern wird weiter in Richtung auf die Abstapeleinheit transportiert.

Es versteht sich, daß bei dem kurzzeitigen Stillsetzen des oberen Förderbandes bzw. dem Festhalten der im Arbeitsbereich der Stempeleinrichtung befindlichen Matrizenform auch die nachfolgenden Matrizenformen nicht weitertransportiert werden, sondern kurzfristig stillstehen. Da dieser Stillstand aber nur sehr kurze Zeit dauert und die Verteilerschnecken das Rohmaterial auch während dieses Stillstands quer über die Matrizenformen verteilen, sind Betriebsstörungen hierbei nicht zu befürchten.

In der Abstapeleinheit 18 werden die aufeinanderfolgend herantransportierten Matrizenformen mit den im wesentlichen fertiggestellten, aber noch nicht ausgehärteten Formkörpern mittels eines nicht näher dargestellten Paternosterförderers im Maschinenrahmen nach unten transportiert und auf dem unteren Förderband 17 abgelegt, mit dem sie zur auf der anderen Maschinenseite angeordneten Aufstapeleinheit 19 transportiert werden, die ähnlich wie die Abstapeleinheit 18 ausgestaltet ist und mit der die Matrizenformen wieder auf das Niveau des oberen Förderbandes gelangen. Mit Hilfe eines Pneumatikzylinders 51 werden die Matrizenformen nacheinander in der Reihenfolge ihres Herantransports aus der Aufstapeleinheit 19 heraus in die Ausformeinrichtung 15 geschoben, in der die fertigen Formkörper aus den Matrizenformen ausgeformt werden. Hierzu weist die Ausformeinrichtung eine die Matrizenform in einem Abstand von einem darunter befindlichen Aufnahmebehältnis 52 haltende Halteeinrichtung 53 in Form von die Matrizenform an deren Längsseiten unterfassenden Halteleisten und eine oberhalb der Matrizenform angeordnete Ausformstempeleinheit 54 auf, die ähnlich wie die Verdichtungseinheit mehrere Einzelstempel 55 aufweist, deren Anzahl und Lage an die Formöffnungen in der darunter befindlichen Matrizenform angepasst sind. Die Ausformstempeleinheit 54 mit den daran angeordneten Einzelstempeln wird nach Fixieren der Matrizenform in ihrer korrekten Lage mit Hilfe von (nicht dargestellten) Fixierzylindern nach unten verfahren, wobei die Einzelstempel in die Aufnahmeöffnungen gelangen und die fertigen Formkörper nach unten in das Aufnahmebehältnis ausdrücken. Auf ein Rotieren der Einzelstempel kann bei der Ausformeinrichtung verzichtet werden, da das Verfestigungsmittel im Formkörperrohstoff beim Ausformen bereits weitestgehend ausreagiert hat und die Gefahr des Klebens an den Einzelstempeln nicht mehr besteht.

Das Aufnahmebehältnis kann dann mit einem quer zur Transportrichtung der Fördereinrichtung angeordneten Förderorgan 56 abgezogen und die darin befindlichen Formkörper für ihre weitere Behandlung, insbesondere ihrem Transport an Gärtnereien oder andere Abnehmer weiterbehandelt werden, während die dann wieder leere Matrizenform sich hinten an die Reihe der Formen anschließt, die wieder der Substrataufbereitungs- und Aufgabeeinrichtung zugeführt werden, um weitere Formkörper herzustellen.

Man erkennt, daß die zwischen der Verdichtungseinrichtung und der Ausformeinrichtung befindliche, im wesentlichen aus der Abstapeleinheit 18, dem unteren Förderband und der Aufstapeleinheit 19 bestehende Teil der Fördervorrichtung 11 eine Pufferstrecke 57 bildet, bei deren Durchlauf das in den fertig verdichteten Formkörpern befindliche Verfestigungsmittel ausreichend Zeit hat auszureagieren, so daß beim Ausformvorgang keine Gefahr besteht, daß die fertigen Formkörper zerbrechen oder zerbröseln. Ein vollständiger Umlauf einer Matrizenform vom Zeitpunkt der Aufgabe des Formkörperrohstoffes bis zur Ausformung der fertigen Formkörper dauert etwa vier bis sechs Minuten, wobei die Dauer allein durch Veränderung der Transportgeschwindigkeit der Fördereinrichtung 11 variiert und an veränderliche Bedingungen wie beispielsweise die Art des eingesetzten Verfestigungsmittels, des Substrats oder die Größe der Formkörper angepasst werden kann.

Das erfindungsgemäße Verfahren ermöglicht eine Verarbeitung des Substrates in der beschriebenen Vorrichtung unter nur geringem Einsatz von Wasser, so daß sich in den verfahrensgemäß hergestellten Formkörpern allenfalls eine geringe Menge Überschußwasser befindet. Anders als bei den bisher bekannten Verfahren, bei denen das Substrat zunächst mit Wasser zu einer pastösen Masse aufgeschlämmt wurde, sind aufwendige Maßnahmen zum Entzug von Überschußwasser aus den fertigen Formkörpern bei der Erfindung nicht erforderlich. Bei Einsatz der bevorzugt als Verfestigungsmittel zum Einsatz kommenden Wasser-NCO-Prepolymer-Emulsion, wie sie aus der deutschen Offenlegungsschrift DE-OS 198 30 955 bekannt ist, auf die hiermit nochmals ausdrücklich Bezug genommen wird, kann mit einem Masseverhältnis von Verfestigungsmittel zu Pflanzsubstrat im Bereich von 1:1 bis 5:1, bezogen auf die Masse des Pflanzsubstrats gearbeitet werden, d.h. auf 1 Kilogramm Pflanzsubstrat müssen lediglich 1 bis 5 Kilogramm Verfestigungsmittel, bestehend aus Wasser und Prepolymer, zugegeben werden, was einen problemlos handhabbaren, gut schütt- bzw. rieselfähigen Formkörperrohstoff ergibt. Die Menge des dem Substrat zugegebenen Prepolymer ist vergleichsweise gering. Bei Einsatz des bevorzugten Materials gemäß der DE 198 30 955 A1 beträgt das Verhältnis von Prepolymer und Substrat lediglich 1 bis 20 Gew.%, bezogen auf die trockene Gesamtmasse dieser (theoretischen) Mischung, und liegt vorzugsweise unter 8 Gew.%. Überraschenderweise hat sich gezeigt, daß eine Vermischung des Verfestigungsmittels und des Substrats bei diesen geringen Mengen von Prepolymer und Wasser innerhalb kürzester Zeit mit sehr hohem Vermischungsgrad möglich ist. Als insbesondere vorteilhaft für die gute Durchmischung der beiden Bestandteile des Formkörperrohstoffes hat sich das Einsprühen des Verfestigungsmittels in das in den Mischbehälter fallende Pflanzsubstrat erwiesen, was für eine sehr gute Vormischung vor dem Verrühren mit dem Mischorgan sorgt.

Der geringe Wassergehalt im Formkörperrohstoff und die damit verbundene gute Handhabbarkeit des Materials trägt auch dazu bei, daß Verunreinigungen durch Formkörperrohstoff gut wieder entfernt werden können. Hierbei hat sich insbesondere als vorteilhaft erwiesen, daß die in Kontakt mit dem Formkörperrohstoff bzw. dem Verfestigungsmittel gelangenden Teile der Vorrichtung aus Polyethylen, aus Polypropylen oder Gemischen hieraus oder aus Copolymerisaten aus Ethylen und/oder Propylen bestehen. So bestehen beispielsweise nicht nur die Matrizenformen, sondern auch der Mischbehälter und die Verdichtungsstempel an ihren stirnseitigen Enden wie auch die Verteilerschnecken und die Rückführeinheit aus Polyethylen oder einem anderen der vorgenannten Materialien, an dem der klebrige Formkörperrohstoff kaum haften bleibt und von dem er problemlos wieder entfernt werden kann. Im Mischbehälter wird diese Abreinigung durch das rotierende Mischorgan unterstützt, das während des Mischvorgangs sich nicht nur um sich selbst, sondern auch um die zentrale Achse des Mischbehälters dreht und dabei ähnlich wie ein Rührwerkzeug einer Küchenmaschine die Innenwand des Mischbehälters von daran anhaftendem Material befreit.

## Patentansprüche

1. Verfahren zum Herstellen von aus Pflanzsubstrat und diesem zugemengten Verfestigungsmittel bestehenden Formkörpern, insbesondere für die Pflanzenanzucht, mit folgenden Verfahrensschritten:
- Zuführen einer vorbestimmten Menge im wesentlichen trockenen Substrats (33) in einen Mischbehälter (25) und gleichzeitiges Einsprühen des Verfestigungsmittels (34) in das Substrat und Vermischung von Substrat und Verfestigungsmittel mittels eines Mischorgans (26) zu einem Formkörperrohstoff (35);
- Abzug des Formkörperrohstoffs (35) aus dem Mischbehälter (25) und Einbringen in Formöffnungen (22) einer Matrizenform (12);
- Verdichten des in den Formöffnungen (22) befindlichen Formkörperrohstoffs (35); und
- Ausformen der Formkörper aus den Formöffnungen (22) der Matrizenform (12) nach zumindest teilweisem Aushärten bzw. Abbinden des Verfestigungsmittels.

2. Verfahren nach Anspruch 1, **dadurch gekennzeichnet, daß** das Verfestigungsmittel (34) eine Wasser-NCO-Prepolymer-Emulsion ist.

3. Verfahren nach Anspruch 1 oder 2, **dadurch gekennzeichnet, daß** als Verfestigungsmittel (34) eine Emulsion aus Wasser und einem Prepolymer auf Basis organischer Di- und/oder Polyisocyanate, insbesondere einem Toluylendiisocyanat-Prepolymer, verwendet wird.

4. Verfahren nach einem der Ansprüche 1 bis 3, **dadurch gekennzeichnet, daß** das Substrat (33) mittels einer Zufuhreinrichtung (27) von oben in den Mischbehälter (25) zugeführt und das Verfestigungsmittel (34) in das fallende Substrat (33) eingesprüht wird.

5. Verfahren nach einem der Ansprüche 1 bis 4, **dadurch gekennzeichnet, daß** das Mischorgan (26) während des Mischvorgangs an der Innenwandung des Mischbehälters (25) zu dessen Abreinigung entlang bewegt wird.

6. Verfahren nach einem der Ansprüche 1 bis 5, **dadurch gekennzeichnet, daß** der Formkörperrohstoff (35) aus dem Mischbehälter (25) chargenweise durch eine in dessen Boden angeordnete Abzugsöffnung (32) abgezogen und von dort direkt auf die Oberseite (23) der Matrizenform (12) zur anschließenden Verteilung in die Formöffnungen (22) fällt.

7. Verfahren nach einem der Ansprüche 1 bis 6, **dadurch gekennzeichnet, daß** der Formkörperrohstoff (35) mittels mindestens einer Verteilerschnecke (37 bzw.38) seitlich über die Matrizenform (12) transportiert wird, während sich diese etwa quer zur Förderrichtung der Verteilerschnecke (37, 38) bewegt.

8. Verfahren nach einem der Ansprüche 1 bis 7, **dadurch gekennzeichnet, daß** die Matrizenform (12)während des Einbringens des Formkörperrohstoffs (35) in die Formöffnungen (22) einer Rüttelbewegung unterworfen wird.

9. Verfahren nach einem der Ansprüche 1 bis 8, **dadurch gekennzeichnet, daß** die Menge des zur Verfüllung in die Formöffnungen (22) auf der Matrizenform (12) befindlichen Formkörperrohstoffs (35) mittels einer Sensoreinrichtung (45) ermittelt und in Abhängigkeit von dem ermittelten Wert die Verfahrensschritte zum Anmischen einer weiteren Charge Formkörperrohstoffs im Mischbehälter (25) ausgelöst werden.

10. Verfahren nach einem der Ansprüche 1 bis 9, **dadurch gekennzeichnet, daß** der Überschuß des zur Einfüllung in die Formöffnungen (22) seitlich über die Matrizenform (12) transportierten Formkörperrohstoffs (35) zurück zur etwa unterhalb der Abzugsöffnung gelegenen Aufgabestelle (36) transportiert und von dort erneut seitlich über dieselbe oder eine nachfolgende Matrizenform (12) transportiert und dabei in die darin enthaltenen Formöffnungen (22) eingefüllt wird.

11. Verfahren nach einem der Ansprüche 1 bis 10, **dadurch gekennzeichnet, daß** der in den Formöffnungen (22) befindliche Formkörperrohstoff (35) mittels Stempelelementen (47) verdichtet wird, die in die Formöffnungen (22) eingeführt und gleichzeitig rotierend oder oszillierend angetrieben werden.

12. Verfahren nach einem der Ansprüche 1 bis 11, **dadurch gekennzeichnet, daß** die Formkörper nach dem Aushärten bzw. Abbinden des Verfestigungsmittels (34) mit Hilfe von Ausformstempeln (55) aus den Formöffnungen (22) der Matrizenform (12) in ein darunter befindliches Aufnahmebehältnis (52) ausgedrückt werden.

13. Verfahren nach einem der Ansprüche 1 bis 12, **dadurch gekennzeichnet, daß** die Matrizenform (12) mittels eines Förderorgans (11) auf diesem aufliegend nacheinander unter dem Mischbehälter (25), der Verteilerschnecke(37 bzw. 38), den Verdichtungsstempelelementen (47) und den Ausformstempeln (55) transportiert wird, wobei der Transportvorgang beim Verdichten und beim Ausformen während dieser Vorgänge unterbrochen wird.

14. Verfahren nach einem der Ansprüche 1 bis 13, **dadurch gekennzeichnet, daß** das Masseverhältnis von Verfestigungsmittel (34) zu Pflanzsubstrat (33) 1:1 bis 5:1, bezogen auf die Masse des Pflanzsubstrats beträgt.

15. Verfahren nach einem der Ansprüche 2 bis 14, **dadurch gekennzeichnet, daß** das Masseverhältnis von Prepolymer zu Substrat im Bereich von 1 bis 20 Gew.%, bezogen auf die Gesamtmasse der aus Substrat und Prepolymer bestehenden trockenen Mischung liegt und vorzugsweise kleiner ist als 8 Gew.%.

16. Verfahren nach einem der Ansprüche 1 bis 15, **dadurch gekennzeichnet, daß** das Verfestigungsmittel (34) mittels eines Mischaggregats (29) durch Vermischen eines wasseraushärtenden Prepolymers mit Wasser erzeugt und unmittelbar anschließend in das Pflanzsubstrat im Mischbehälter (25) eingesprüht wird.

17. Verfahren nach Anspruch 16, **dadurch gekennzeichnet, daß** das Mischaggregat (29) nach Erzeugung des Verfestigungsmittels (34) mit Wasser nachgespült wird, das zusätzlich zu dem Verfestigungsmittel (34) in das Pflanzsubstrat (33) eingesprüht wird.

18. Vorrichtung zum Herstellen von aus Pflanzsubstrat und diesem zugemengten Verfestigungsmittel bestehenden Formkörpern, insbesondere zur Durchführung des Verfahrens nach einem der Ansprüche 1 bis 16, mit einer Fördereinrichtung (11) für mindestens eine Matrizenform (12) sowie mit einer Substrat-Aufbereitungs- und Aufgabeeinrichtung (13), einer Verdichtungseinrichtung (14) und einer Ausformeinrichtung (15), die in Transportrichtung (16) der Fördereinrichtung (11) entlang dieser hintereinander angeordnet sind.

19. Vorrichtung nach Anspruch 18, **dadurch gekennzeichnet, daß** die Substrat-Aufbereitungs- und Aufgabeeinrichtung (13) einen Mischbehälter (25) sowie ein diesem zugeordnetes Substratförderorgan (27) und eine in den Mischbehälter (25) mündende Sprüheinrichtung (28) für das Verfestigungsmittel (34) aufweist.

20. Vorrichtung nach Anspruch 18 oder 19, **dadurch gekennzeichnet, daß** die Sprüheinrichtung (28) im wesentlichen aus einem Mischaggregat (29) zum Vermischen eines Verfestigungsmittelrohstoffs mit Wasser und einer Einspritzdüse (30) besteht.

21. Vorrichtung nach einem der Ansprüche 18 bis 20, **dadurch gekennzeichnet, daß** der Mischbehälter (25) mit einem Mischerrührwerk (26) versehen ist.

22. Vorrichtung nach einem der Ansprüche 18 bis 21, **dadurch gekennzeichnet, daß** der Mischbehälter (25) oberhalb der auf der Fördereinrichtung (11) aufliegend transportierten Matrizenform(en) (12) an einer Aufgabestelle (36) angeordnet ist und eine an seinem Boden (31) angeordnete, verschließbare Abzugsöffnung (32) aufweist.

23. Vorrichtung nach einem der Ansprüche 18 bis 22, **dadurch gekennzeichnet, daß** die Aufgabeeinrichtung (13) mindestens eine oberhalb der Matrizenform(en) (12) angeordnete, im wesentlichen quer zur Transportrichtung (16) der Fördereinrichtung (11) fördernde Verteilerschnecke (37) für den Formkörperrohstoff (35) aufweist.

24. Vorrichtung nach einem der Ansprüche 18 bis 23, **dadurch gekennzeichnet, daß** die Aufgabeeinrichtung (13) zwei hintereinander und oberhalb der Matrizenform(en) (12) angeordnete, gegenläufig fördernde Verteilerschnecken (37, 38) für den Formkörperrohstoff (35) aufweist.

25. Vorrichtung nach einem der Ansprüche 18 bis 24, **gekennzeichnet durch** eine seitlich an bzw. neben der Matrizenform (12) sich bis in den Förderweg der Verteilerschnecke(n) (37,38) erstreckende Rückführeinheit (39) für überschüssigen Formkörperrohstoff (35).

26. Vorrichtung nach Anspruch 25, **dadurch gekennzeichnet, daß** die Rückführeinheit (39) im wesentlichen aus einem seitlich neben der Fördereinrichtung (11) auf Höhe des mit dieser transportierten Matrizenform (12) angeordneten Förderband (40) besteht, das sich von einer Übernahmestelle (41) an der in Transportrichtung (16) der Fördereinrichtung (11) hinteren Verteilerschnecke (38) bis zu einer Übergabestelle (42) vor der vorderen Verteilerschnecke (37) erstreckt.

27. Vorrichtung nach Anspruch 26, **dadurch gekennzeichnet, daß** der Rückführeinheit (39) im Bereich der Übergabestelle (42) eine rotierend antreibbare Bürsteneinheit (43) zugeordnet ist.

28. Vorrichtung nach einem der Ansprüche 18 bis 27, **gekennzeichnet durch** eine im Bereich der Aufgabeeinrichtung (13) angeordnete Rütteleinrichtung (44).

29. Vorrichtung nach Anspruch 28, **dadurch gekennzeichnet, daß** die Rütteleinrichtung (44) im wesentlichen aus einer unterhalb der Matrizenform (12) angeordneten, rotierend antreibbaren Rüttelwelle besteht.

30. Vorrichtung nach einem der Ansprüche 18 bis 29, **dadurch gekennzeichnet, daß** die Verdichtungseinrichtung (14) im wesentlichen aus einer oberhalb der Fördereinrichtung (11) bzw. der mit dieser aufliegend transportierten Matrizenform (12) angeordneten, höhenverstellbaren Stempeleinheit (46) mit mehreren Einzelstempeln (47) besteht, deren Anzahl und Lage an die Formöffnungen (22) in der Matrizenform (12) angepaßt sind.

31. Vorrichtung nach Anspruch 30, **dadurch gekennzeichnet, daß** die Einzelstempel (47) um eine lotrecht zur Oberseite der Matrizenform (12) verlaufende Drehachse rotierend oder oszillierend antreibbar sind.

32. Vorrichtung nach einem der Ansprüche 18 bis 31, **dadurch gekennzeichnet, daß** die Einzelstempel (47) an ihrer Stirnseite (49) mit zentralen Bohrzapfen (50) versehen sind.

33. Vorrichtung nach einem der Ansprüche 18 bis 32, **dadurch gekennzeichnet, daß** die Verdichtungseinrichtung (14) einen die Lage einer Matrizenform (12) abtastenden Sensor zum Stillsetzen der Fördereinrichtung (11) und eine Fixiereinrichtung zum Fixieren der Matrizenform (12) aufweist.

34. Vorrichtung nach einem der Ansprüche 18 bis 3, **dadurch gekennzeichnet, daß** die Einzelstempel (47) einen gemeinsamen Antrieb haben.

35. Vorrichtung nach einem der Ansprüche 18 bis 34, **dadurch gekennzeichnet, daß** zwischen der Verdichtungseinrichtung (14) und der Ausformeinrichtung (15) eine Pufferstrecke (57) vorgesehen ist.

36. Vorrichtung nach Anspruch 35, **dadurch gekennzeichnet, daß** die Pufferstrecke (57) im wesentlichen von einem Teil der Fördereinrichtung (11) gebildet wird.

37. Vorrichtung nach einem der Ansprüche 18 bis 36, **dadurch gekennzeichnet, daß** zwischen der Verdichtungseinrichtung (14) und der Ausformeinrichtung (15) eine Absenkeinheit (18), ein Matrizenrückführband (17) und eine Anhebeeinheit (19) angeordnet sind, die als Teil der Fördereinrichtung (11) gemeinsam die Pufferstrecke (57) bilden.

38. Vorrichtung nach einem der Ansprüche 18 bis 37, **dadurch gekennzeichnet, daß** die Ausformeinrichtung (15) eine die Matrizenform (12) in einem Abstand von einem darunter anordbaren Aufnahmebehältnis (52) haltende Halteeinrichtung (53) sowie eine oberhalb der Matrizenform (12) angeordnete Ausformstempeleinheit (54) mit mehreren Ausformstempeln (55) aufweist, deren Anzahl und Lage an die Formöffnungen in der darunter befindlichen Matrizenform (12) angepaßt sind.

39. Vorrichtung nach einem der Ansprüche 18 bis 38, **dadurch gekennzeichnet, daß** die Ausformeinrichtung (15) ein unterhalb der Ausformstempeleinheit (54) und der Matrizenform (12) angeordnetes Förderorgan (56) für das Aufnahmebehältnis (52) aufweist.

40. Vorrichtung nach Anspruch 39, **dadurch gekennzeichnet, daß** das Förderorgan (52) quer oder schräg zur Förderrichtung (16) der Fördereinrichtung (11) angeordnet ist.

41. Vorrichtung nach einem der Ansprüche 18 bis 40, **dadurch gekennzeichnet, daß** der Mischbehälter (25), die Verteilerschnecke(en) (37,38), die Einzelstempel (47) der Verdichtereinrichtung (14) und/oder die Matrizenform(en) (12) aus Polyethylen, Polypropylen oder Gemischen hieraus oder aus Copolymerisaten aus Ethylen und/oder Propylen bestehen.
